# EUROPEAN PATENT SPECIFICATION

(11) **EP 0 437 932 B1**
(45) Date of publication and mention of the grant of the patent: **10.08.1994**
(21) Application number: 90312807.2
(22) Date of filing: 26.11.1990
(51) Int. Cl.: F16B 37/12

(54) **Inserts**
Einsatzteil
Insert

(30) Priority: 17.01.1990 GB 9001046
(43) Date of publication of application: 24.07.1991
(73) Proprietor: P.S.M. INTERNATIONAL PLC, West Midlands WV13 2JS (GB)
(72) Inventor: Highfield, Anthony Michael, Fairway, Ironbridge, Shropshire (GB)
(74) Representative: Hands, Horace Geoffrey

(56) References cited:
- EP-A- 0 443 134
- DE-A- 3 721 577
- FR-A- 2 184 350
- FR-A- 2 504 616

## Description

This invention relates to installation of inserts in soft materials and more specifically in thermoplastic materials.

There are very many designs of special purpose fasteners which have a central bore formed with a screw-thread and intended to be displaced into a pre-formed bore in the plastics or like component to enable mounting of a second component. For example in a first well known and successful design a generally cylindrical insert has a first annular zone at one end (the upper end) which is straight splined, that is the splines lie in planes containing the axis of the inserts. The remainder of the insert is diametrically slit into least two near semi-circular portions and the slit is of sufficient width to enable those portions to be closed together, thus enabling the other end to be inserted into the preformed hole of the same length as the insert. The slit portions are provided with a series of generally peripherally extending external ribs. This insert is located in the hole and driven in for the final portion of the necessary travel to embed the straight splines in the material at the entry-end of the hole. Insertion of a bolt or like into the screw-threaded bore of the insert then expands the semi-circular portions back to their original condition in which the slits are parallel sided and embeds the ribs in the plastic material. Such an insert relies upon the presence of the bolt or like to maintain the insert in the material, and the radial dimension of rib which is possible, which governs the resistance to pull-out loads, is limited by the possible dimensions of the slits and the resistance to the radial closing action necessary on insertion at the unslit portion of the insert.

Another and second well known and successful insert in GB 2099096-A is generally similar except that the slits are omitted. The presence or absence of the screw is then unimportant which makes these better when a component containing the insert is not to have the screw connected to it immediately - which is necessary with the said first design if the insert is to be secured to the component. In this case installation is effected by a press operation and the resistance to pull-out loads afforded by the ribs is limited by the dimension of rib which is possible in the press operation and by the recovery of the plastics material to flow behind the ribs.

A third design of insert has the whole of the exterior effectively formed with a coarse self-tapping screw-thread, so that when inserted in a suitable pre-formed hole and rotated, the insert screws itself into the material. Such inserts have little or no resistance to screw-out loads and the pull-out resistance depends upon the screw-thread form on the exterior of the insert.

A fourth insert in GB 1314731 has a plurality of successive annular splined zones separated by helical peripheral grooves. When, inserted into a suitable pre-formed hole and subject to a relatively gentle squeezing pressure (for insertion), the insert (again) screws itself into the workpiece as the splines cut or displace the plastics material to form grooves allowing the splines to penetrate, and the displaced plastics material fills the peripheral grooves. The displacement material in the peripheral grooves provides a substantial part of the pull-out resistance.

A fifth approach in GB 1279452 has two or more annular zones which are helically splined in opposite directions. Such an insert has to be installed with the application of heat or ultrasonics which cause the thermoplastics material to flow and permit the splines to enter the plastics material displacing the same so as to fill the peripheral grooves. This fastener has the particular advantage of high resistance to angular loads in both directions.

A sixth fastener more specifically designed for heat installation also has a pair of splined zones with a series of peripheral grooves, but the splines extend arcuately for example so that axially opposite ends of each spline may lie in a common plane containing the axis of the fastener but intermediate portions of the spline lie in different planes also containing the axis of the fastener. These arcuate portions may also be operatively related from one annular spline band to the next, so as to give high resistance to turning in both directions.

All of these mentioned fasteners are first to be located generally in position in the extreme upper (outer) end of the pre-formed hole, and often have a pilot portion of plain cylindrical shape, smaller in diameter than the toothed portion for insertion in that hole prior to the application of the installation force. If the tolerance of hole size to end diameter is too large, the fasteners may not stand up properly when only the pilot is in the hole and (in mass production techniques) may be installed imperfectly giving rise to wastage and scrap. On the other hand a too small tolerance may result in inserts that do not enter into the hole at all with the same results.

It is known to make the hole tapered and use a generally cylindrical insert in an attempt to get better location of the insert axis normal to the plane of the surface of the workpiece but this is found to lead to problems in correct axial location of the fasteners. It is also known to use a tapered hole with an insert which is also tapered, i.e. of generally frusto-conical form having pyramidal teeth or projections formed over substantially the whole of its periphery to be installed by ultrasonics. However the pull-out resistance of such a fastener is relatively low.

In EP 0443134-A the fastener has a fine sawtooth-shape thread on its exterior and is inserted in a receiving bore in a workpiece of the same tapering angle as the insert. This insert is inserted by a screwing motion to cut a thread in the plastic material and displace the material to fill the spaces in the thread profile as far as possible.

In FR-A-2184350 a fastener is made of plastics material for example Nylon, to be inserted in a table or other item of wooden furniture and has barbs spaced circumferentially on its outer surface. The fastener is to be pushed by force into the cavity and retained in place when a metal screw is inserted into the fastener and cuts its thread therein.

DE-A-3721577 also provides a plastic bush made with a metal insert carrying internal threads, and the metal threads are only inserted into the plastic bush after the same has been installed. This metal component, although used in a quite different way to the insert of the present invention, does provide an insert for a thermoplastics material and to be inserted by heat or ultrasonics, the insert comprising a metal body having a head of non-circular shape at one end in particular being of toothed cylindricity, and having a series of generally peripherally extending ribs or fins spaced apart along its length towards the end opposite to the head, this insert being installed by a method comprising inserting the opposite end into a preformed hole in the plastic component and pressing the insert into the softened material resulting in the ribs or fins becoming embedded in the material and the head ending up flush with the surface to which the hole extends.

According to the present invention, the fins are interrupted to allow flow of material from one inter-fin space to the next via the interruptions, the preformed hole is tapered and the fins are of successively smaller diameter towards the opposite end, the relative diameters being such that a major portion of the length of the finned portion is supported in the preformed hole before the pressing operation begins, and the head extends radially beyond the fins for a substantial distance and displaces material substantially to fill the voids between the insert and hole.

Preferably the fins are close-packed, but a plain neck is located between the head and the first fin. Each fin may have an upper face adjacent the head normal to a plane containing the axis of the fastener and a lower face adjacent the said opposite end which is acutely related. Preferably also the fins are radially slotted to provide said interruptions and this allows flow of plastics material from one inter-tooth face to the next.

It will be appreciated by those skilled in the art that the fins provide the pull-out resistance and the knurling on the head provides the torque resistance, although the radial slots can also contribute to this.

The preformed hole for the insert is to be at least of the same length as the insert, and preferably slightly larger.

The invention is now more particularly described with reference to the accompanying drawings in which:-
Figure 1 is an elevation of a fastener;
Figure 2 shows the same in position and supported by a pre-formed hole in a component made of a thermoplastics material;
Figure 3 shows the fastener fully inserted.

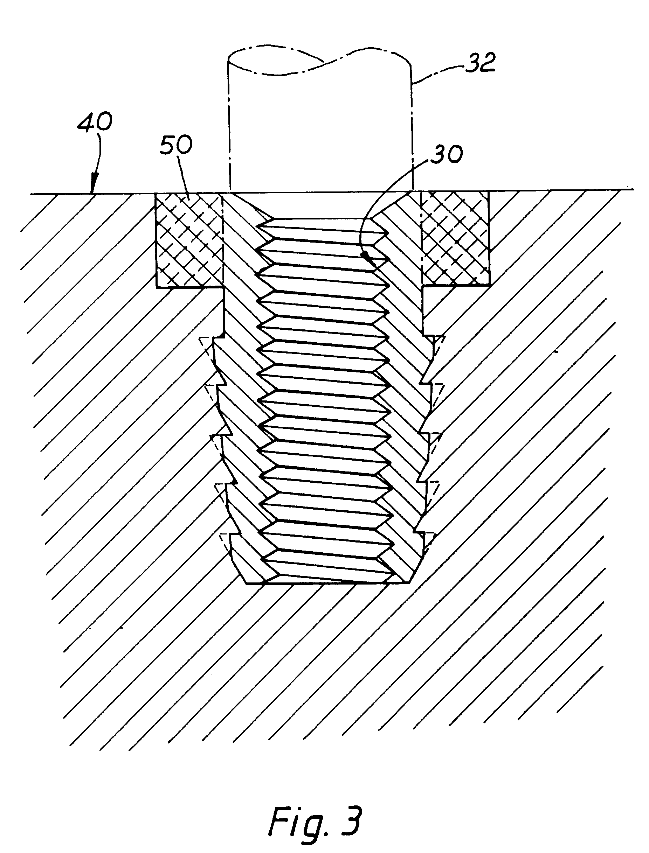

The fastener or insert is made of metal and may provide a female screw thread 30, Fig 3, or for example a male stud portion 32 projecting therefrom. Figure 3 shows these two alternatives.

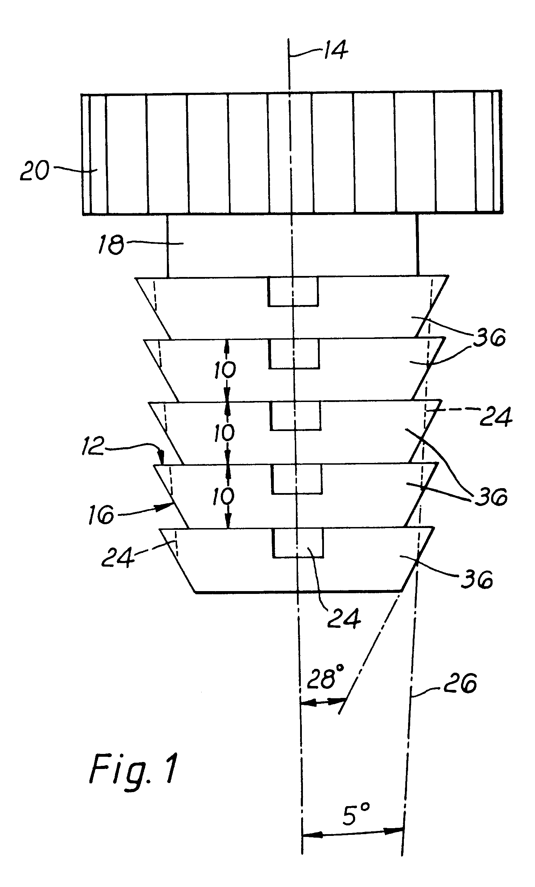

In Fig 1 the fins 36 have a common axial dimension 10, and each has an upper flank 12 normal to the axis 14 and a lower flank 16 inclined to that axis by an acute angle. The angle between the flank and axis in this illustrative embodiment is about 28 degrees, i.e. an included angle between flanks of 56 degrees.

A plain neck or cylindrical zone 18 is provided between the uppermost rib and the knurled head 20, and the zone 18 may be of the same axial dimension 10 as the fins. The head 20 may be of an axial dimension of the order of two or three times the width 10.

Each successive rib away from the head is smaller and the angle 22 of taper may be about 4 or 5 degrees so that the finned portion occupies a notional frusto-cone.

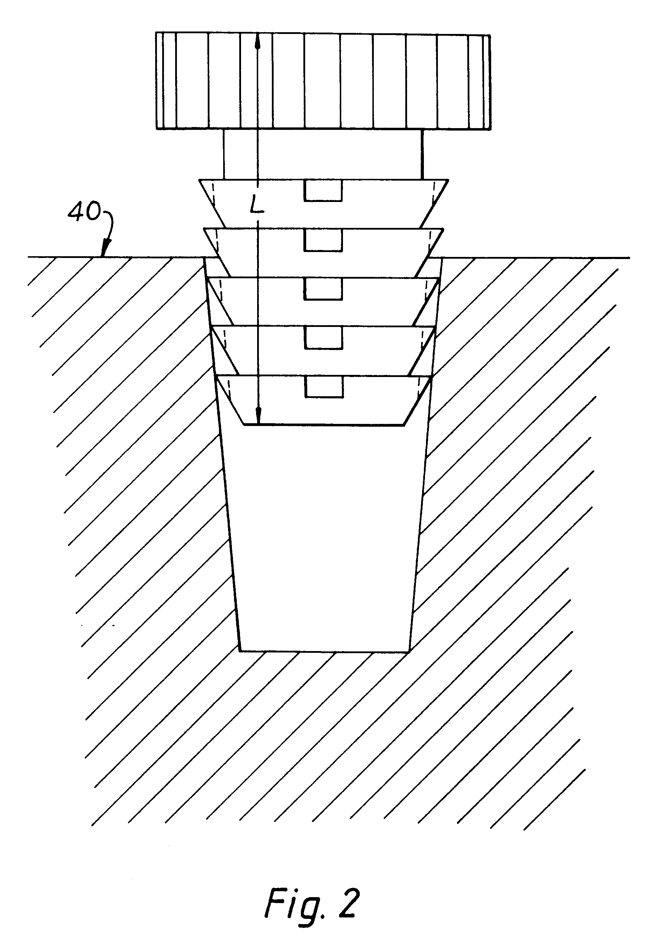

The ribs are slotted at 24, conveniently at four equispaced points about each rib. This slotting may be produced or equivalent to that produced by running a milling cutter or circular saw blade along the line 26, which may be at an angle of 4 or 5 degrees to the axis 14, or less, e.g. parallel to the axis. Hence the slots are in four axially aligned series of slots. The depth of slot is the same in all of the ribs or may be deeper towards the head. The hole Fig 2 is of the same length as the fastener, that is to say the length of the head, groove and fins, but not including any projecting stud (Figure 3) or may be longer. The hole is tapered at about the same angle and the dimensions are such that at the larger end (at the surface of the material) the diameter of the hole is slightly less than the diameter of the second of the fins from the insertion end. Hence, as shown in Figure 2, the majority of the finned portion may be received in the hole so as to support the insert with its axis 14 normal to the component and co-axial with the hole, in stable fashion.

It will be appreciated that when the insert is pressed towards the material and up to the point where the underside of the head 20 rests on the surface of the material, this is accompanied by relatively minor displacement of the plastics material such as may be accomplished without using heat or ultrasonics and with many thermoplastics materials in industrial use, the nature of the material will be such as to allow the passage of the fins, with a slight resilient restoration of the thermoplastics material so that the peripheries of the fins become embedded in the wall of the bore.

However, the final displacement of the head 20 so that the upper surface becomes flush with the surface 40 of the component, accomplished with the aid of some softening of the material by heat or ultrasonics, displaces a volume of material dependent on the size of the head. The cross-hatched area reference 50 Figure 3 shows the volume so displaced which is sufficient to complete the filling of the neck groove 18 and the inter-rib spaces and the peripheral slots 24 which themselves allow flow of material down the fastener during this pressing operation.

In the course of this installation technique, the volume of the head (the shaded area) and the vanes is critically related to the design of the fastener, and the hole size, and as mentioned is chosen so as to ensure complete filling of the voids.

It has been found experimentally that the illustrated fastener is particularly efficient for automatic installation, avoiding the production of scrap and giving particularly good pull-out and torque resistance.

The head itself is toothed, for example by knurling to provide ribs and grooves parallel to the axis, and the extent of these affects the torque resistance.

## Claims

1. A method of installation of an insert in a thermoplastic material by heat or ultrasonics, in which the insert comprises a metal body, the body having a head (20) of non-circular shape at one end, for example of knurled or toothed cylindricity, and having a series of generally peripherally extending ribs (36) or fins spaced apart along its length towards the opposite end; said method comprising inserting the said opposite end into a preformed hole in said thermoplastic material and pressing the insert into the softened material resulting in the ribs or fins becoming embedded into the material and the head ending up flush with the surface (40) to which said hole extends, characterised in that the fins are interrupted (24) to allow flow of material from one inter-fin space to the next via the interruptions, in that the pre-formed hole is tapered and the fins are of successively smaller diameter towards said opposite end, the relative diameters being such that a major part of the length of the finned portion is supported in the pre-formed hole before the pressing operation begins, and in that the head extends radially beyond the fins for a substantial distance and displaces material substantially to fill the voids between the insert and hole.

2. A method as claimed in Claim 1 wherein the fins comprise planar faces (12) adjacent said head and acutely related faces (16) adjacent said opposite end.

3. A method as claimed in Claim 2 wherein said fins are closely spaced.

4. A method as claimed in Claim 1 wherein said fins are radially slotted to provide said interruptions.

5. A method as claimed in any preceding Claim wherein a plain neck groove (18) is disposed between said head and fin.

## Patentansprüche

1. Verfahren zum Einbau eines Einsatzteiles in einem thermoplastischem Material unter Einwirkung von Hitze oder Ultraschall, wobei das Einsatzteil einen Körper aus Metall enthält,
der an einem Ende einen nichtkreisförmigen Kopf (20) aufweist, der beispielsweise zylindrisch und dabei mit Vorsprüngen oder einer Verzahnung versehen ist,
und der eine Anzahl von sich im wesentlichen in Umfangsrichtung erstreckenden Rippen (36) oder Stegen aufweist, die mit Abstand zueinander über seine Länge in Richtung auf das entgegengesetzte Ende angeordnet sind;
wobei das Verfahren folgende Verfahrensschritte enthält:
das entgegengesetzte Ende wird in ein im thermoplastischen Material vorgeformtes Loch eingeführt und
der Einsatzteil wird in das aufgeweichte Material eingedrückt, was dazu führt, daß die Rippen oder Stege in das Material gebettet werden und der Kopf mit der Oberfläche (40) bündig abschließt, bis zu der das Loch sich erstreckt,
dadurch gekennzeichnet, daß
die Rippen Unterbrechungen (24) aufweisen, um einen Materialfluß über diese Unterbrechungen von einem Rippen-Zwischenraum zum nächsten zu ermöglichen,
daß sich das vorgeformte Loch verjüngt und die Rippen in Richtung auf das abgewandte Ende sukzessive kleiner im Durchmesser werden, wobei die Relativdurchmesser so gewählt sind, daß ein wesentlicher Teil der Länge des mit Rippen versehenen Abschnittes im vorgeformten Loch gestützt wird, bevor das Einpressen beginnt,
und daß der Kopf in radialer Richtung erheblich über die Rippen hinausragt und das Material im wesentlichen dazu versetzt, die Zwischenräume zwischen dem Einsatz und dem Loch zu verfüllen.

2. Verfahren nach Anspruch 1, wobei die Rippen angrenzend an den Kopf ebene Oberflächen (12) und angrenzend an das entgegengesetzte Ende winkelig hierzu stehende Oberflächen (16) aufweisen.

3. Verfahren nach Anspruch 2, wobei die Rippen dicht nebeneinander angeordnet sind.

4. Verfahren nach Anspruch 1, wobei die Rippen in radialer Richtung geschlitzt sind, um auf diese Weise Durchbrechungen zu bilden.

5. Verfahren nach wenigstens einem der vorangegangenen Ansprüche, wobei eine glatte Halsnut (18) zwischen dem Kopf und die Rippe eingefügt ist.

## Revendications

1. Procédé d'installation d'un insert dans un matériau thermoplastique par la chaleur ou par ultrasons, selon lequel l'insert comprend un corps métallique, ce corps présentant à une extrémité une tête (20) de forme non circulaire, par exemple une forme cylindrique moletée ou dentée, et comportant une série de nervures ou ailettes (36) disposées de façon périphérique et espacées sur sa longueur en direction de l'extrémité opposée ; le dit procédé consistant à introduire la dite extrémité opposée dans un trou preformé dans le dit matériau thermoplastique et à presser l'insert dans le matériau ramolli de façon à noyer les nervures ou ailettes dans le matériau et que la tête finisse de niveau avec la surface (40) dans laquelle est ménagé le trou, caractérisé en ce que les ailettes présentent des interruptions (24) pour permettre l'écoulement de matériau d'un espace entre ailettes au suivant par l'intermédiaire des interruptions, en ce que le trou préformé est effilé et les diamètres des ailettes successives diminuent en allant vers l'extrémité opposée, les diamètres relatifs étant tels qu'une majeure partie de la longueur de la partie à ailettes se trouve supportée dans le trou peréformé avant que l'opération de pressage commence, et en ce que la tête s'étend radialement au-delà des ailettes sur une distance substantielle et déplace du matériau pour remplir de façon substantielle les vides entre l'insert et le trou.

2. Procédé selon la revendication 1, dans lequel les ailettes comprennent des faces planes (12) adjacentes à la dite tête et des faces (16) faisant entre elles un angle aigu qui sont adjacentes à la dite extrémité opposée.

3. Procédé selon la revendication 2, dans lequel les dites ailettes sont proches l'une de l'autre.

4. Procédé selon la revendication 1, dans lequel les dites ailettes présentent des fentes radiales pour ménager les dites interrruptions.

5. Procédé selon l'une quelconque des revendications précédentes, dans lequel une gorge plane (18) formant col est disposée entre les dites tête et ailette.
